# EUROPEAN PATENT APPLICATION

(11) **EP 3 373 426 A1**
(43) Date of publication of application: **12.09.2018**
(21) Application number: 18160223.6
(22) Date of filing: 06.03.2018
(51) Int. Cl.: H02K 21/04

(54) **WOUND-ROTOR SYNCHRONOUS MACHINE WITH PERMANENT MAGNETS**

(30) Priority: 06.03.2017 US 201715450580
(71) Applicant: Hamilton Sundstrand Corporation, Charlotte, NC 28217-4578 (US)
(72) Inventor: GIERAS, Jacek F., Glastonbury, CT Connecticut 06033 (US); ROZMAN, Gregory I., Rockford, IL Illinois 61114 (US)
(74) Representative: Dehns

(57) **Abstract**

A synchronous machine (200) is disclosed which includes a stator (212) defined by an annular stator yoke having a central axis, and a rotor (120) axially supported within the stator (212) and defined by a central rotor yoke (124) having a plurality of radially extending rotor pole cores (226a - 226d), each rotor pole core (226a - 226d) having a radially outer arcuate rotor pole shoe (228a - 228c), wherein a permanent magnet is positioned between each circumferentially adjacent pair of rotor pole shoes (228a - 228c) and a field excitation winding (232a) is associated with each rotor pole core (226a - 226d).

## Description

### BACKGROUND OF THE INVENTION

### 1. Field of the Invention

The subject disclosure relates to synchronous machines, and more particularly, to a wound-rotor synchronous machine with a hybrid excitation system that includes permanent magnets and field excitation windings.

### 2. Description of Related Art

Salient-pole synchronous machines are known in the art. For example, U.S. Patent No. 8,148,866 discloses a synchronous machine wherein embedded permanent magnets and concentrated-parameter field coils are placed on the same salient poles. In the synchronous machines disclosed in U.S. Patent Nos. 7,777,384; 7,859,231; and 8,085,003 additional control coils are wound on the stator core. Other hybrid synchronous machines are described in U.S. Patent No. 6,509,664 and U.S. Patent No. 6,713,888.

There is a disadvantage associated with a synchronous machine having permanent magnets, in that the constant flux field excited by the permanent magnets can only be controlled by a solid state convertor. In contrast, synchronous machines with hybrid excitation systems that include permanent magnets and field excitation windings can provide more design flexibility in terms of control. That is because a high air gap magnetic flux density can be maintained due to the presence of the permanent magnets, the rotor excitation flux can be more easily controlled and the permanent magnets can assist to increase field excitation flux at the rotor poles.

The wound-rotor synchronous machine of the subject disclosure, having permanent magnets placed between adjacent circumferentially spaced apart rotor pole shoes and having DC field excitation windings associated with each rotor pole core, can provide enhanced regulation of rotor excitation flux and assistance to increase the field excitation flux at the rotor poles.

### SUMMARY OF THE INVENTION

The subject invention is directed to a new and useful synchronous machine with superior properties and improved reliability that includes a stator defined by an annular stator yoke having a central axis, and a rotor axially supported within the stator and defined by a central rotor yoke having a plurality of radially extending rotor pole cores, each rotor pole core having a radially outer arcuate rotor pole shoe, wherein a permanent magnet (PM) is positioned between each circumferentially adjacent pair of rotor pole shoes.

The stator includes a plurality of circumferentially spaced apart radially extending stator teeth separated from one another by a stator slot. Preferably, a direct current (DC) field excitation winding is associated with each of the rotor pole core to impact or otherwise alter the flux of the permanent magnets. It is envisioned that the DC field excitation windings are formed from wire windings selected from the group consisting of round wire, square wire and wire ribbon.

The flux of the permanent magnets will depend upon the direction of magnetization of the permanent magnets. More particularly, the flux of the permanent magnets will be reduced when the current in the DC field excitation windings flows in a first direction, and the flux of the permanent magnets will be increased or magnified when the current in the DC field excitation windings flows in a second direction.

The rotor preferably includes an even number of rotor poles. For example, the rotor can include four rotor poles. It is envisioned however that the rotor can include as few as two poles and as many as eight or more poles.

The subject invention is further directed to a salient-pole synchronous machine that includes a stator defined by an annular stator yoke having a central axis and including a plurality of circumferentially spaced apart radially extending stator teeth separated from one another by a stator slot, and a rotor axially supported on a shaft within the stator and defined by a central rotor yoke having a plurality of radially extending rotor pole cores, each rotor pole core having a radially outer arcuate rotor pole shoe, wherein a permanent magnet is positioned between each circumferentially adjacent pair of rotor pole shoes and a DC field excitation winding is associated with each rotor pole core to impact or otherwise alter the flux of the permanent magnets.

The subject invention is also directed to a method of making a synchronous machine including the steps of providing an annular stator, axially supporting a rotor on a shaft within the stator, the rotor being defined by a central rotor yoke having a plurality of radially extending rotor pole cores, each radially extending rotor pole core having a radially outer arcuate rotor pole shoe, positioning a permanent magnet between each circumferentially adjacent pair of rotor pole shoes, and installing a DC field excitation winding around each of the radially extending rotor pole cores to alter the flux of the permanent magnets.

These and other features of the synchronous machine of the subject invention and the manner in which it is manufactured, assembled and employed will become more readily apparent to those having ordinary skill in the art from the following enabling description of the preferred embodiments of the subject invention taken in conjunction with the several drawings described below.

### BRIEF DESCRIPTION OF THE DRAWINGS

So that those skilled in the art to which the subject disclosure appertains will readily understand how to make and use the synchronous machine of the subject disclosure without undue experimentation, embodiments thereof will be described in detail herein below with reference to certain figures, wherein:
Fig. 1 is a plan view of a typical prior art salient-pole synchronous machine;
Fig. 2 is a plan view of a synchronous machine constructed in accordance with an embodiment of the subject invention, wherein permanent magnets are positioned between circumferentially adjacent pairs of rotor poles;
Figs. 3 and 4 are plan views of a synchronous machine constructed in accordance with an embodiment of the subject invention, wherein DC field excitation windings are associated with each rotor pole, and wherein the path of the magnetic flux at each pole is dependent upon the direction of current flow in the field excitation windings, as shown; and
Fig. 5 is a schematic illustration of a brushless exciter and rotor for the salient-pole synchronous machine of the subject invention.

### DETAILED DESCRIPTION OF THE PREFERRED EMBODIMENTS

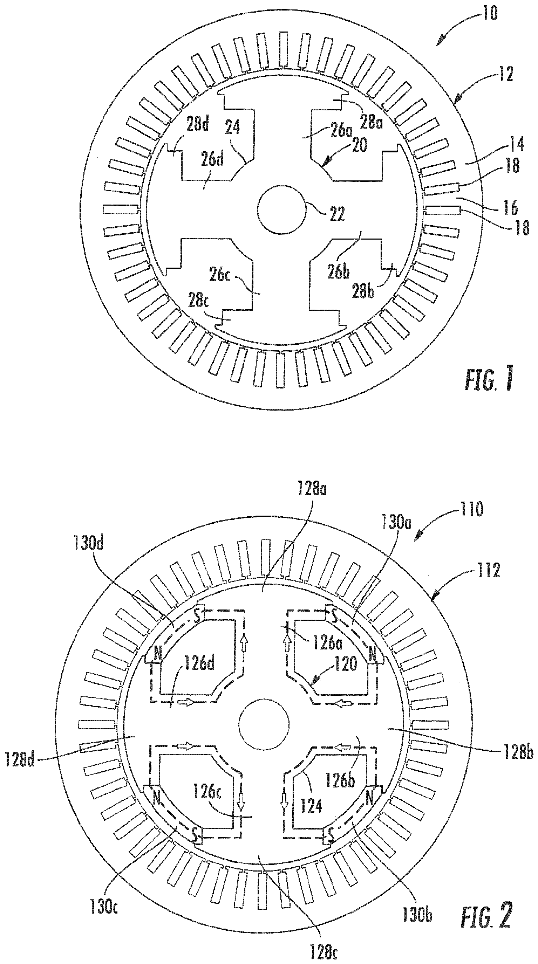

Referring now to the drawings wherein like reference numerals identify similar structural features and/or elements of the subject matter disclosed herein, for purposes of background, there is illustrated in Fig. 1, a typical salient-pole synchronous machine designated generally by reference numeral 10.

Before turning to a detailed description of this inventive machine, the four pole synchronous machine 10 includes a standard three-phase stator (armature) 12 defined by an annular stator yoke 14 having a central axis. The annular stator yoke 14 has a plurality of circumferentially spaced apart radially extending stator teeth 16 separated from one another by stator slots 18.

A rotor 20 is axially supported within the stator 12 on an axial shaft 22. The rotor 20 is defined by a central rotor yoke 24 having four radially extending rotor poles cores 26a-26d, although the number of rotor poles can vary in number from as few as two to as many as eight or more. Each rotor pole core 26a-26d has a radially outer arcuate rotor pole shoe 28a-28d, respectively.

Turning now to Fig. 2, there is illustrated a wound-rotor synchronous machine constructed in accordance with an embodiment of the subject invention and designated generally by reference numeral 110, which includes a stator 112 and an axially supported rotor 120. The rotor 120 is defined by a central rotor yoke 124 having four radially extending rotor poles cores 126a-126d.

The rotor can include more than four poles. Indeed, it is envisioned that the rotor can include any even number of poles including as few as two poles and as many as eight or more poles depending upon the application. In the present application, which is intended for use in conjunction with a power generation system in a ground combat vehicle or the like, four poles are suitable. In aircraft and aerospace applications, which are also envisioned, the number of poles may differ.

In synchronous machine 110, a permanent magnet (PM) is positioned between each circumferentially adjacent pair of rotor pole shoes 128a-128d of rotor 120. These permanent magnets serve to produce rotor excitation flux and assist the wound rotor poles to increase field excitation flux. More particularly, PM 130a is positioned between the rotor pole shoes 128a and 128b, PM 130b is positioned between rotor pole shoes 128b and 128c, PM 130c is positioned between rotor pole shoes 128c and 128d, and PM 130d is positioned between rotor pole shoes 128d and 128a.

The orientation of PMs 130a-130d is such that common poles are associated with each rotor pole shoe 128a-128d. That is, PMs 130a and 130b are oriented in the rotor 120 so that the N poles of both PMs are directly associated with rotor pole shoe 128b, PMs 130b and 130c are oriented in rotor 120 so that the 130b and 130c S poles of both PMs are directly associated with rotor pole shoe 128c, PMs 130c and 130d are oriented in rotor 120 so that the N poles of both PMs are directly associated with rotor pole shoe 128d, and PMs 130d and 130a are oriented so that the S poles of both PMs are directly associated with rotor pole shoe 128a. Consequently, for each individual rotor pole, the paths of the magnetic flux of the associated pair of PMs will be synchronized, as illustrated in Fig. 2, wherein the flux path for each PM is shown in dashed lines with arrows indicating the direction of flux.

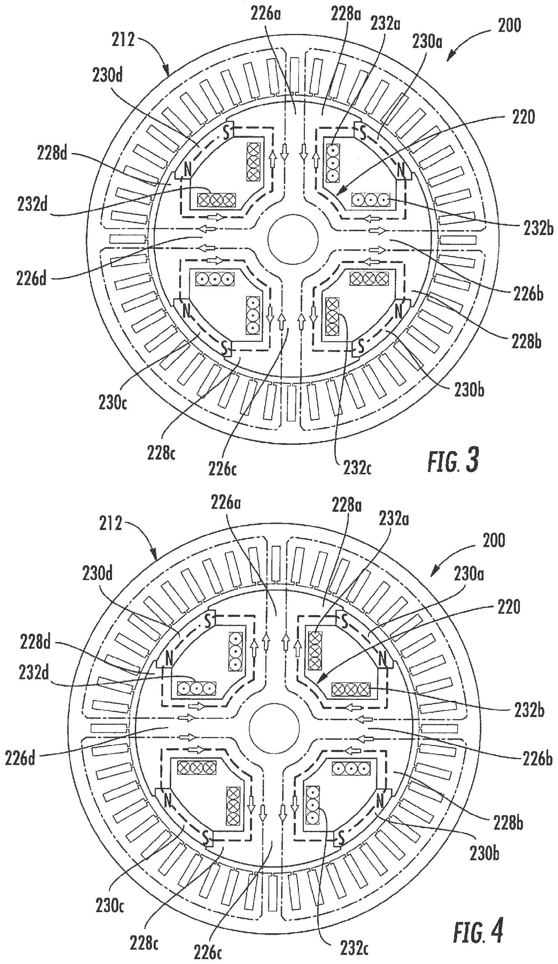

Referring now to Fig. 3, there is illustrated another wound-rotor synchronous machine constructed in accordance with an embodiment of the subject invention and designated generally by reference numeral 200. Synchronous machine 200 has a hybrid excitation system. More particularly, synchronous machine 200 includes a stator 212 and an axially supported rotor 220 having four circumferentially spaced apart rotor pole cores 226a-226d, and four PMs 230a-230d positioned between respective circumferential ly adjacent pairs of rotor poles shoes 228a-228c.

In addition, a DC field excitation winding is associated with each rotor pole core 226a-226d. Specifically, field excitation winding 232a is associated with rotor pole core 226a, field excitation winding 232b is associated with rotor pole core 226b, field excitation winding 232c is associated with rotor pole core 226c, and field excitation winding 232d is associated with rotor pole core 226d. It is envisioned that the DC field excitation windings 232a-232d may be formed from wire windings that are selected from the group of materials consisting of round wire, square wire and wire ribbon.

In synchronous machine 200, the flux of the PMs 230a-230d is dependent upon the direction of magnetization of the permanent magnets. More particularly, when the rotor field winding is fed with DC current, the rotor field winding flux can reduce or magnify the flux of the PMs depending upon the direction or polarity of the field winding current. That is, the flux of PMs 230a-230d will be reduced when the current in the DC field excitation windings 232a-232d flows in a first direction, as shown by the direction of the flux indicator arrows in Fig. 3, and the flux of the PMs 230a-230d will be magnified when the current in the DC field excitation windings flows in a second direction, as shown by the direction of the flux indicator arrows in Fig 4.

It is envisioned that the synchronous machine 200 can operate both as a generator (i.e., for regulation of output voltage) and/or a motor (i.e., for torque control). In the synchronous machine 200, with its hybrid excitation systems, i.e., field excitation winding and PMs provide, there is a great deal of design flexibility, because the location of the PMs between the rotor pole shoes provide a high air magnetic flux density in the air gap, the rotor excitation flux can be easily controlled, and the PMs will assist the wound rotor poles to increase the field excitation flux. Moreover, the position of the PMs and the rotor field excitation winding provides the effect of weakening or magnifying the PM flux more so than in prior art synchronous machines with magnetic flux regulation. Consequently, there will be a positive impact on voltage and/or torque control. There is also less copper needed in the rotor field winding. This will ease manufacturing, and advantageously reduce the overall size, weight and cost of the machine.

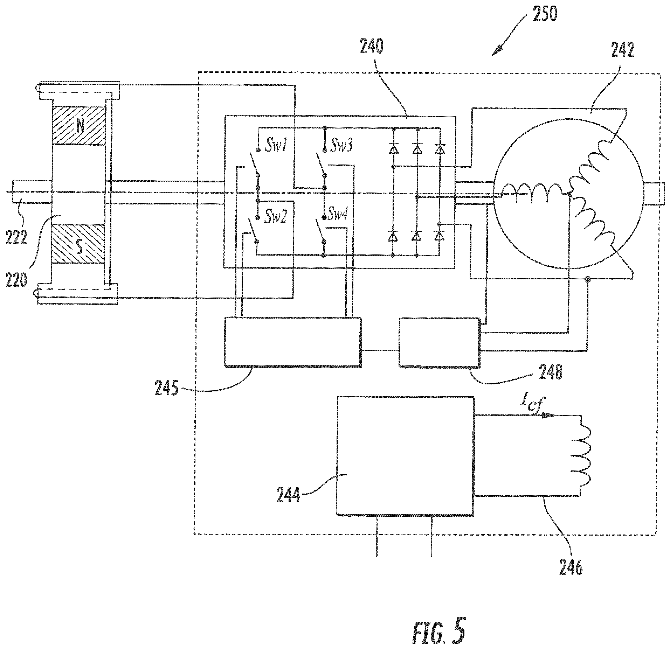

It is also envisioned that the rotor of the synchronous machine 200 of the subject invention can be excited from a brushless exciter, a rotary transformer or a solid state rectifier using slip rings and brushes. By way of example, Fig. 5 shows how the rotor 220, which is axially mounted on a shaft 222, is excited from a typical brushless exciter 250. The brushless exciter 250 includes a rotating rectifier 244 with an associated direct current commutator and a rotating armature 242. As shown, a DC controller 244 provides current to the field winding 246 of the exciter 250. In addition, a gate drive 245 is provided for controlling the switches (*Sw1* - *Sw4)* of the rotating current commutator and a phase detector 248 is operatively connected to the gate drive 245 and the rotating armature 242. The direction of dc current in the main field winding located on a rotor 220 is determined by rotation of the generator shaft 222. The direction of the shaft 222 rotation is detected by the phase detector 248 that controls gate drive 245. In one direction the switches Sw1 and Sw4 of the rotating commutator are closed, and switches Sw2 and Sw3 are open. In another direction the switches Sw1 and Sw4 are open, and switches Sw2 and Sw3 are closed. The direction of rotation may also be detected by the rotor position detector (not shown) typically used in applications of wound rotor synchronous machines.

While the wound-rotor synchronous machines of the subject disclosure have been shown and described with reference to preferred embodiments, those skilled in the art will readily appreciate that changes and/or modifications may be made thereto without departing from the scope of the subject disclosure.

## Claims

1. A synchronous machine (200) comprising:
a stator (212);
a rotor (120) rotationally positioned within the stator (121) and defined by a central rotor yoke (124) having a plurality of radially extending rotor pole cores (226a - 226d), each rotor pole core having a radially outer arcuate rotor pole shoe (228a - 228c); and
a permanent magnet positioned between each circumferentially adjacent pair of the radially outer arcuate rotor pole shoes.

2. The synchronous machine recited in Claim 1, wherein the stator (212) includes a plurality of circumferentially spaced apart radially extending stator teeth (16) separated from one another by a stator slot (18).

3. The synchronous machine recited in Claim 1 or 2, wherein a DC field excitation winding (232a) is wound around each of the rotor pole cores (226a -226d) and configured to alter a flux of the permanent magnets.

4. The synchronous machine recited in Claim 3, wherein the flux of the permanent magnets will depend upon the direction of magnetization of the permanent magnets.

5. The synchronous machine recited in Claim 4, wherein the flux of the permanent magnets will be reduced when current in the DC field excitation windings (232a) flows in a first direction.

6. The synchronous machine recited in Claim 5, wherein the flux of the permanent magnets will be increased when current in the DC field excitation windings (232a) flows in a second direction.

7. The synchronous machine recited in any preceding Claim, wherein the rotor (120) includes four rotor pole cores /226a - 226d).

8. The synchronous machine recited in Claim 3, wherein the DC field excitation windings (232a) are formed from wire windings selected from the group consisting of round wire, square wire and wire ribbon.

9. A synchronous machine comprising:
a stator (212);
a rotor (120) axially supported on a shaft within the stator and defined by a central rotor yoke (124) having a plurality of radially extending rotor pole cores (226a - 226d), each radially extending rotor pole core (226a - 226d) having a radially outer arcuate rotor pole shoe (228a - 228d); and
a permanent magnet positioned between each circumferentially adjacent pair of rotor pole shoes (228a - 228c); and
a DC field excitation winding (232a) wound around each of the radially extending rotor pole cores (226a - 226d) configured to alter the flux of the permanent magnets.

10. The synchronous machine recited in Claim 9, wherein the stator (212) includes a plurality of circumferentially spaced apart radially extending stator teeth (16) separated from one another by a stator slot (18).

11. The synchronous machine recited in Claim 9 or 10, wherein the flux of the permanent magnets will depend upon the direction of magnetization of the permanent magnets.

12. The synchronous machine recited in Claim 9 10 or 11, wherein the flux of the permanent magnets will be reduced when the current in the DC field excitation windings (232a) flows in a first direction, and the flux of the permanent magnets will be increased when the current in the DC field excitation windings flows in a second direction.

13. The synchronous machine recited in any preceding Claim, wherein the rotor (120) includes an even number of rotor pole cores (226a -226d).

14. The synchronous machine recited in any of Claims 9 to 13, wherein the DC field excitation windings (232a) are formed from wire windings selected from the group consisting of round wire, square wire and wire ribbon.

15. A method of making a synchronous machine comprising:
providing a stator (212);
axially supporting a rotor (120) on a shaft within the stator (212), the rotor (120) being defined by a central rotor yoke (124) having a plurality of radially extending rotor pole cores (226a - 226d), each radially extending rotor pole core (226a - 226d) having a radially outer arcuate rotor pole shoe (228a - 228c);
positioning a permanent magnet between each circumferentially adjacent pair of rotor pole shoes (228a - 228c); and
installing a DC field excitation winding (232a) around each of the radially extending rotor pole cores (226a - 226d) to alter the flux of the permanent magnets.
